# EUROPÄISCHE PATENTANMELDUNG

(11) **EP 1 980 350 A1**
(43) Veröffentlichungstag der Anmeldung: **15.10.2008**
(21) Anmeldenummer: 08002512.5
(22) Anmeldetag: 12.02.2008
(51) Int. Cl.: B23D 47/04, B65G 47/90

(54) **Sägevorrichtung zum Sägen plattenförmiger Werkstücke**

(30) Priorität: 13.04.2007 DE 102007018255
(71) Anmelder: Reich Spezialmaschinen GmbH, 72622 Nürtingen (DE)
(72) Erfinder: Strasser, Rainer, 4571 Steyrling (AT); Hackl, Franz, 4591 Molln (AT); Vogl, Rudof, 2560 Berndorf (AT)
(74) Vertreter: Hoeger, Stellrecht & Partner Patentanwälte

(57) **Zusammenfassung**

Um eine Sägevorrichtung (10) zum Sägen plattenförmiger Werkstücke, mit einer mindestens eine Klemmvorrichtung (42) zum Erfassen eines Werkstücks aufweisenden Vorschubvorrichtung (40) zum Positionieren des Werkstücks relativ zu einer Sägeeinheit (46) so zu verbessern, dass ein zu sägendes Werkstück ohne die Gefahr einer Beschädigung zuverlässig an der Vorschubvorrichtung festgelegt werden kann, wird vorgeschlagen, dass die Sägevorrichtung (10) eine Sperreinrichtung (104) umfasst, mittels welcher in Abhängigkeit von der Lage eines zu sägenden Werkstücks relativ zur Klemmvorrichtung (42) die Klemmvorrichtung (42) sperrbar oder für ein Erfassen des Werkstücks freigebbar ist.

## Beschreibung

Die Erfindung betrifft eine Sägevorrichtung zum Sägen plattenförmiger Werkstücke, mit einer mindestens eine Klemmvorrichtung zum Erfassen eines Werkstücks aufweisenden Vorschubvorrichtung zum Positionieren des Werkstücks relativ zu einer Sägeeinheit.

Derartige Sägevorrichtungen kommen insbesondere zur Bearbeitung von plattenförmigen Holz- oder Kunststoffplatten zum Einsatz. Hierbei wird ein zu sägendes Werkstück zunächst mit Hilfe der Klemmvorrichtung an der Vorschubvorrichtung festgelegt. Anschließend kann mit Hilfe der Vorschubvorrichtung das Werkstück so positioniert werden, das es von einer Sägeeinheit bearbeitet werden kann.

Um eine unerwünschte Bewegung eines mit Hilfe mindestens einer Klemmvorrichtung erfassten Werkstücks relativ zu der Vorschubvorrichtung ausschließen zu können, sind bekannte Klemmvorrichtungen so ausgelegt, dass sie hohe Klemmkräfte aufbauen können. Im Querschnitt massive Werkstücke können diese Klemmkräfte normalerweise ohne Beschädigung aufnehmen. Wenn jedoch ein Werkstück einen im Querschnitt nicht massiven Bereich aufweist, kann nicht ausgeschlossen werden, dass das Werkstück in diesem nicht massiven Bereich oder auch in hierzu angrenzenden, massiven Bereichen, beschädigt wird.

Insbesondere bei Werkstücken, die aus mehreren Schichten zusammengesetzt sind, kann es vorkommen, dass einzelne Materialschichten an einer Berandung des Werkstücks über einen geschlossenen Verbund aller Materialschichten des Werkstücks hervorstehen. Dies kann insbesondere bei Werkstücken der Fall sein, die eine Kernschicht aufweisen, auf welcher eine zusätzliche, deckende Materialschicht aufgebracht ist, beispielsweise ein Echtholzfurnier.

Hiervon ausgehend liegt der vorliegenden Erfindung die Aufgabe zugrunde, eine Sägevorrichtung der eingangs genannten Art zu schaffen, mit welcher ein zu sägendes Werkstück ohne die Gefahr einer Beschädigung zuverlässig an der Vorschubvorrichtung festgelegt werden kann.

Diese Aufgabe wird bei einer Sägevorrichtung mit den Merkmalen des Oberbegriffs von Anspruch 1 erfindungsgemäß dadurch gelöst, dass die Sägevorrichtung eine Sperreinrichtung umfasst, mittels welcher in Abhängigkeit von der Lage eines zu sägenden Werkstücks relativ zur Klemmvorrichtung die Klemmvorrichtung sperrbar oder für ein Erfassen des Werkstücks freigebbar ist.

Die erfindungsgemäße Sägevorrichtung ermöglicht es, ein Erfassen eines zu sägenden Werkstücks mit Hilfe der Klemmvorrichtung in bestimmten Lagen des Werkstücks zu verhindern, indem die Sperreinrichtung die Klemmvorrichtung sperrt. Mit Hilfe der Sperreinrichtung kann die Klemmvorrichtung jedoch auch für ein Erfassen des Werkstücks freigegeben werden. Die Sperrung oder Freigabe der Klemmvorrichtung mit Hilfe der Sperreinrichtung erfolgt in Abhängigkeit der Lage des zu sägenden Werkstücks. Somit ist sichergestellt, dass die Klemmvorrichtung nur in bestimmten Lagen des zu sägenden Werkstücks für ein Erfassen des Werkstücks freigegeben ist und somit Klemmkräfte aufbauen kann. In anderen Lagen des zu sägenden Werkstücks wird die Klemmvorrichtung mit Hilfe der Sperreinrichtung gesperrt, so dass eine Beschädigung des Werkstücks ausgeschlossen ist.

Vorzugsweise ist die Klemmvorrichtung mittels der Sperreinrichtung mechanisch sperrbar. Hierdurch wird ein besonders einfacher Aufbau der Sägevorrichtung erreicht. Mit Hilfe der mechanischen Sperrbarkeit der Sägevorrichtung wird außerdem ein besonders zuverlässiger Betrieb der Sägevorrichtung ermöglicht. Dies liegt daran, dass bei einer mechanischen Sperrbarkeit der Klemmvorrichtung vergleichsweise schmutzanfällige Sensoren und entsprechende, nachgeschaltete Aktoren nicht erforderlich sind. Dies ist insbesondere im Hinblick auf eine durch das Sägen der Werkstücke bedingte span- und staubhaltige Produktionsumgebung vorteilhaft.

Eine bevorzugte Ausführungsform der Erfindung sieht vor, dass die Sperreinrichtung ein Kontaktelement aufweist, das aus einer Sperrstellung, in welcher die Sperreinrichtung die Klemmvorrichtung sperrt, in eine Freigabestellung, in welcher die Sperreinrichtung die Klemmvorrichtung zum Erfassen des Werkstücks freigibt, überführbar ist. Somit kann eine Sperrung oder Freigabe der Klemmvorrichtung in Abhängigkeit der Lage des Kontaktelements erfolgen.

Bevorzugt ist es, wenn das Kontaktelement einen Anlageabschnitt für eine Anlage des Werkstücks aufweist und wenn das Kontaktelement durch eine Bewegung des angelegten Werkstücks aus der Sperrstellung in die Freigabestellung überführbar ist. Diese Ausgestaltung ermöglicht einen besonders einfachen und sicheren Betrieb der Sägevorrichtung. Hierbei wird die Klemmvorrichtung erst freigegeben, wenn das Kontaktelement mit Hilfe des an den Anlageabschnitt des Werkstücks angelegten Werkstücks aus der Sperrstellung in die Freigabestellung überführt wurde. Ausgehend von einem gesperrten Zustand bleibt die Klemmvorrichtung also gesperrt, solange ein zu sägendes Werkstück von dem Kontaktelement beabstandet ist oder solange das Werkstück das Kontaktelement lediglich berührt. Erst wenn das Kontaktelement durch die Bewegung des angelegten Werkstücks in die Freigabestellung überführt wird, nimmt das Werkstück selbst eine Lage relativ zu der Klemmvorrichtung ein, in welcher die Sperreinrichtung die Klemmvorrichtung freigibt und somit die Klemmvorrichtung das Werkstück erfassen kann.

Günstig ist es ferner, wenn die Sägevorrichtung eine eine Auflageebene definierende Auflageeinrichtung zur Auflage des Werkstücks umfasst. Die Auflageeinrichtung erleichtert die Handhabung des Werkstücks, das auf der Auflageebene aufliegen kann und relativ zu der Vorschubvorrichtung so positionierbar ist, dass die Sperreinrichtung die Klemmvorrichtung für ein Erfassen des Werkstücks freigibt.

Eine vorteilhafte Ausführungsform der Erfindung sieht vor, dass das Kontaktelement in einer zu der Auflageebene parallelen oder im Wesentlichen parallelen Richtung bewegbar ist. Dies hat den Vorteil, dass bei einem Kontakt oder bei einer Anlage des Werkstücks an dem Anlageabschnitt des Kontaktelements das Kontaktelement bei einer Bewegung des Werkstücks auf der Auflageebene in entsprechenden Richtungen bewegt werden kann, so dass eine einfache Überführung des Kontaktelements aus der Sperrstellung in die Freigabestellung ermöglicht ist.

Nach einer weiteren vorteilhaften Ausführungsform der Erfindung ist das Kontaktelement in einer zu der Auflageebene senkrechten oder im Wesentlichen senkrechten Richtung bewegbar. Auch diese Bewegbarkeit ermöglicht eine gute Überführbarkeit des Kontaktelements aus einer Sperrstellung in eine Freigabestellung. Insbesondere kann das Kontaktelement sowohl in einer zu der Auflageebene parallelen oder im Wesentlichen parallelen Richtung als auch in einer zu der Auflageebene senkrechten oder im Wesentlichen senkrechten Richtung bewegbar sein.

Nach einer Weiterbildung der Erfindung liegt das Kontaktelement in der Sperrstellung des Kontaktelements auf der Auflageebene auf. Dies ermöglicht eine besonders einfache Anlage des Werkstücks an den Anlageabschnitt des Kontaktelements.

Eine besonders vorteilhafte Ausführungsform der Erfindung sieht vor, dass das Kontaktelement in der Sperrstellung des Kontaktelements die Auflageebene durchsetzt. Dies ermöglicht eine besonders zuverlässige Anlage des Werkstücks an dem Anlageabschnitt des Kontaktelements. Dies ist besonders vorteilhaft, wenn ein an den Anlageabschnitt des Kontaktelements anzulegender Materialabschnitt eines Werkstücks eine sehr niedrige Materialstärke aufweist, beispielsweise bei einer Furnierschicht.

In vorteilhafter Weise umfasst die Sperreinrichtung eine erste Führungseinrichtung zur Führung des Kontaktelements zwischen der Sperrstellung und der Freigabestellung. Dies ermöglicht eine definierte Bewegung des Kontaktelements zwischen dessen Sperrstellung und dessen Freigabestellung. Außerdem wird mit Hilfe der Führung die Anzahl der Freiheitsgrade bei der Bewegung des Kontaktelements reduziert, so dass auch ein an das Kontaktelement angelegtes Werkstück in einer vorgegebenen Weise bewegt werden muss, um das Kontaktelement in die Freigabestellung überführen zu können. Dies erleichtert die Definition einer Relativlage, in welcher die Sperreinrichtung die Klemmvorrichtung für ein Erfassen des Werkstücks freigibt.

Vorteilhaft ist es, wenn die erste Führungseinrichtung eine Führungsfläche umfasst. Das Kontaktelement kann bei seiner Bewegung zwischen der Sperrstellung und der Freigabestellung auf oder an dieser Führungsfläche entlang gleiten.

Besonders bevorzugt ist es, wenn die Führungsfläche einen Führungsabschnitt aufweist, welcher die Auflageebene durchsetzt. Dies ermöglicht es, das Kontaktelement derart aus dessen Sperrstellung in dessen Freigabestellung zu überführen, dass das Kontaktelement mit Hilfe des Führungsabschnitts aus einer die Auflageebene durchsetzenden Stellung in eine die Auflageebene nicht durchsetzende Stellung bewegt wird. Dieser Bereich der Auflageebene, der dann nicht mehr von dem Kontaktelement durchsetzt wird, steht dann für das Werkstück bzw. einen Randabschnitt des mit Hilfe der Klemmvorrichtung zu erfassenden Werkstücks zur Verfügung.

Besonders günstig ist es, wenn die Sperreinrichtung eine erste Kraftbeaufschlagungseinrichtung umfasst, die eine der Sperrstellung des Kontaktelements entsprechende Vorzugsstellung des Kontaktelements definiert. Somit kann in einfacher Weise eine Grundstellung der Sperreinrichtung definiert werden, in welcher die Sperreinrichtung die Klemmvorrichtung sperrt.

In vorteilhafter Weise umfasst die erste Kraftbeaufschlagungseinrichtung eine Feder oder ist die erste Kraftbeaufschlagungseinrichtung als Feder ausgebildet. Dies hat den Vorteil, dass die erste Kraftbeaufschlagungseinrichtung das Kontaktelement dauerhaft und unabhängig von der aktuellen Stellung des Kontaktelements mit Kraft beaufschlagen kann.

Bevorzugt ist es, wenn die Klemmvorrichtung zum Erfassen des Werkstücks ein relativ zu dem Werkstück bewegliches Klemmelement aufweist.

Insbesondere ist es vorteilhaft, wenn das Klemmelement als Spannhebel ausgebildet ist. Dies ermöglicht einen besonders einfachen Aufbau einer Klemmvorrichtung, mit der hohe Klemmkräfte aufgebracht werden können.

Besonders bevorzugt ist es ferner, wenn die Sperreinrichtung ein direkt oder indirekt mit dem Kontaktelement verbundenes Verriegelungselement umfasst, das direkt oder indirekt mit dem Klemmelement verbunden ist. Mit Hilfe des Verriegelungselements kann ein besonders robuster Aufbau geschaffen werden, bei dem das Werkstück in Anlage mit dem Kontaktelement gebracht werden kann und bei dem das Verriegelungselement dazu vorgesehen ist, die eigentliche Sperrfunktion der Sperreinrichtung zu realisieren. Somit können die für eine Überführung des Kontaktelements aus der Sperrstellung in die Freigabestellung mit Hilfe eines an den Anlageabschnitt des Kontaktelements angelegten Werkstücks erforderlichen Kräfte vergleichsweise niedrig bemessen sein, während die mit Hilfe des Verriegelungselements erzeugten Sperrkräfte sehr hoch sein können.

Nach einer besonders vorteilhaften Ausführungsform der Erfindung bilden das Verriegelungselement und das Klemmelement eine Kniehebelanordnung. Die Kniehebelanordnung hat den Vorteil, dass eine besonders hohe Sperrkraft aufgebaut werden kann, so dass in besonders zuverlässiger Weise gewährleistet ist, dass die Klemmvorrichtung nicht unabsichtlich für ein Erfassen des Werkstücks freigegeben wird.

Vorteilhaft ist es ferner, wenn das Verriegelungselement und das Kontaktelement drehbeweglich miteinander verbunden sind. Dies ermöglicht eine einfache Lagerung und Führung des Kontaktelements.

Ferner ist es bevorzugt, wenn das Klemmelement und das Verriegelungselement drehbeweglich miteinander verbunden sind. Dies ermöglicht eine einfache Lagerung des Verriegelungselements.

Vorzugsweise ist das Verriegelungselement aus einer Blockierstellung, in welcher das Verriegelungselement eine Bewegung des Klemmelements in Richtung auf das Werkstück blockiert, in eine Lösestellung, in welcher das Klemmelement in Richtung auf das Werkstück bewegbar ist, überführbar. Dies ermöglicht einen besonders einfachen Aufbau einer Sperreinrichtung, mit der hohe Sperrkräfte aufgebaut werden können.

Günstig ist es, wenn die Sperreinrichtung eine zweite Führungseinrichtung zur Führung des Verriegelungselements zwischen der Blockierstellung und der Lösestellung umfasst. Dies ermöglicht eine einfache Definition von Zwischenstellungen, welche das Verriegelungselement zwischen seiner Blockierstellung und seiner Lösestellung einnimmt.

Vorzugsweise umfasst die zweite Führungseinrichtung eine Lagerfläche zur Führung einer Lagereinrichtung des Verriegelungselements. Dies ermöglicht eine gute Überführbarkeit des Verriegelungselements aus der Blockierstellung in die Lösestellung.

Nach einer vorteilhaften Ausführungsform der Erfindung umfasst die Lagereinrichtung eine Gleitfläche oder ist die Lagereinrichtung als Gleitfläche ausgebildet. Dies ermöglicht einen besonders einfachen Aufbau der zweiten Führungseinrichtung.

Bei einer weiteren vorteilhaften Ausführungsform der Erfindung umfasst die Lagereinrichtung ein Rolllager oder ist die Lagereinrichtung als Rolllager ausgebildet. Hierdurch können bei der Überführung des Verriegelungselements aus dessen Blockierstellung in die Lösestellung gegebenenfalls auftretende Reibkräfte verringert werden.

Besonders bevorzugt ist es, wenn die Lagerfläche der zweiten Führungseinrichtung und die Führungsfläche der ersten Führungseinrichtung zumindest abschnittsweise identisch sind. Dies ermöglicht einen besonders einfachen und kompakten Aufbau beider Führungseinrichtungen.

Bevorzugt ist es ferner, wenn die Sperreinrichtung eine zweite Kraftbeaufschlagungseinrichtung umfasst, die eine der Blockierstellung des Verriegelungselements entsprechende Vorzugsstellung des Verriegelungselements definiert. Dies ermöglicht die Definition einer Grundstellung, in welcher die Klemmvorrichtung mit Hilfe der Sperreinrichtung gesperrt ist.

Besonders günstig ist es, wenn die zweite Kraftbeaufschlagungseinrichtung eine Feder umfasst oder wenn die zweite Kraftbeaufschlagungseinrichtung als Feder ausgebildet ist. Hierdurch kann das Verriegelungselement unabhängig von seiner aktuellen Stellung mit einer Kraft beaufschlagt werden, die eine Rückführung des Verriegelungselements aus der Lösestellung in die Blockierstellung ermöglicht.

Weitere Merkmale und Vorteile der Erfindung sind Gegenstand der nachfolgenden Beschreibung und der zeichnerischen Darstellung eines bevorzugten Ausführungsbeispiels. In der Zeichnung zeigen:
- Figur 1:: eine perspektivische Ansicht einer erfindungsgemäßen Sägevorrichtung;
- Figur 2: eine perspektivische Ansicht einer Klemmvorrichtung der Sägevorrichtung aus Figur 1;
- Figur 3:: eine Draufsicht der Klemmvorrichtung aus Figur 2;
- Figur 4:: eine Ansicht längs der Linie 4-4 in Figur 3;
- Figur 5:: eine Vorderansicht der Klemmvorrichtung aus Figur 2;
- Figur 6a:: eine Seitenansicht der Klemmvorrichtung aus Figur 2 in einem gesperrten Zustand der Klemmvorrichtung;
- Figur 6b:: eine der Figur 6a entsprechende Ansicht der Klemmvorrichtung aus Figur 2 in einem freigegebenen Zustand der Klemmvorrichtung;
- Figur 6c:: eine der Figur 6a entsprechende Ansicht der Klemmvorrichtung aus Figur 2 mit einem mit Hilfe der Klemmvorrichtung erfassten Werkstück;
- Figur 7a:: einen in Figur 6a mit 7a bezeichneten Ausschnitt in vergrößerter Darstellung;
- Figur 7b:: einen in Figur 6b mit 7b bezeichneten Ausschnitt in vergrößerter Darstellung; und
- Figur 7c:: einen in Figur 6c mit 7c bezeichneten Ausschnitt in vergrößerter Darstellung.

Gleiche oder funktional äquivalente Elemente sind in allen Figuren mit denselben Bezugszeichen bezeichnet.

In der Zeichnung ist eine erfindungsgemäße Sägevorrichtung am Beispiel einer insgesamt mit dem Bezugszeichen 10 belegten Druckbalkensäge schematisch dargestellt. Diese umfasst ein Maschinengestell 12, das einen Auflagetisch 14 ausbildet mit einem Sägespalt 16. Unterhalb des Sägespalts ist ein Transportwagen 18 in Bearbeitungsrichtung 20 linear verfahrbar am Maschinengestell 12 gehalten.

An einander gegenüberliegenden Stirnseiten trägt das Maschinengestell 12 jeweils einen Druckbalkenturm 22, 24, der eine Führungsanordnung 26 bzw. 28 aufnimmt. Mittels der Führungsanordnungen 26, 28 ist an den Druckbalkentürmen 22, 24 eine Niederhaltevorrichtung in Form eines Druckbalkens 30 in zur Tischebene des Auflagetisches 14 senkrechter Richtung verstellbar gehalten. Der Druckbalken 30 weist in üblicher Weise ein ungefähr C-förmiges Profil auf mit einer dem Sägespalt 16 zugewandten schlitzförmigen Öffnung, in die bei der Bearbeitung eines Werkstücks, nämlich der Vornahme eines Sägeschnittes, verstellbar am Transportwagen 18 gehaltene Sägeblätter 32, 34 eintreten können.

Die Führungsanordnungen 26 und 28 der beiden Druckbalkentürme 22, 24 umfassen in üblicher und deshalb in der Zeichnung nicht dargestellter Weise druckmittelbeaufschlagbare Zylinder, mit denen der Druckbalken 30 angehoben und abgesenkt werden kann.

Die Sägevorrichtung 10 weist zwei parallel zueinander und senkrecht zur Bearbeitungsrichtung 20 ausgerichtete Führungsschienen 36, 38 auf, an denen eine Vorschubvorrichtung 40 in Form eines Transportschlittens verschiebbar gehalten ist. Die Vorschubvorrichtung 40 ist mittels eines an sich bekannten und deshalb in der Zeichnung nicht dargestellten Antriebes entlang der Führungsschienen 36, 38 definiert hin- und her bewegbar.

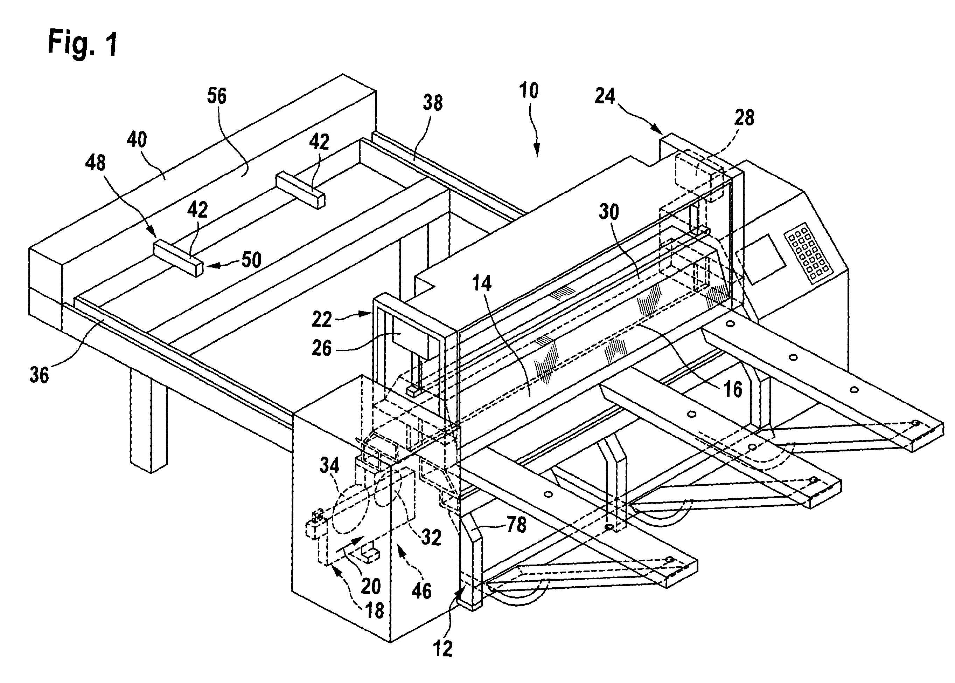

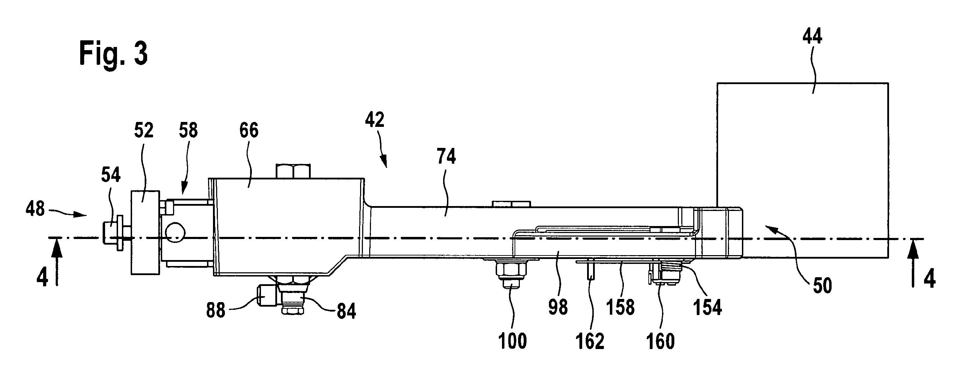

An der Vorschubvorrichtung 40 sind zwei in Figur 1 zur Verbesserung der Übersichtlichkeit nur schematisch dargestellte Klemmvorrichtungen 42 gehalten, mit denen ein beispielsweise in Figur 3 dargestelltes, plattenförmiges Werkstück 44, vorzugsweise eine Holz- oder Kunststoffplatte, erfasst und zur Bearbeitung in Richtung auf den Sägespalt 16 verschoben werden kann.

Die Sägeblätter 32 und 34 sind mit Hilfe eines an sich bekannten und deshalb in der Zeichnung nicht dargestellten Antriebsmotors angetrieben. Dieser Antriebsmotor, die Sägeblätter 32 und 34 sowie der Transportwagen 18 bilden eine Sägeeinheit 46.

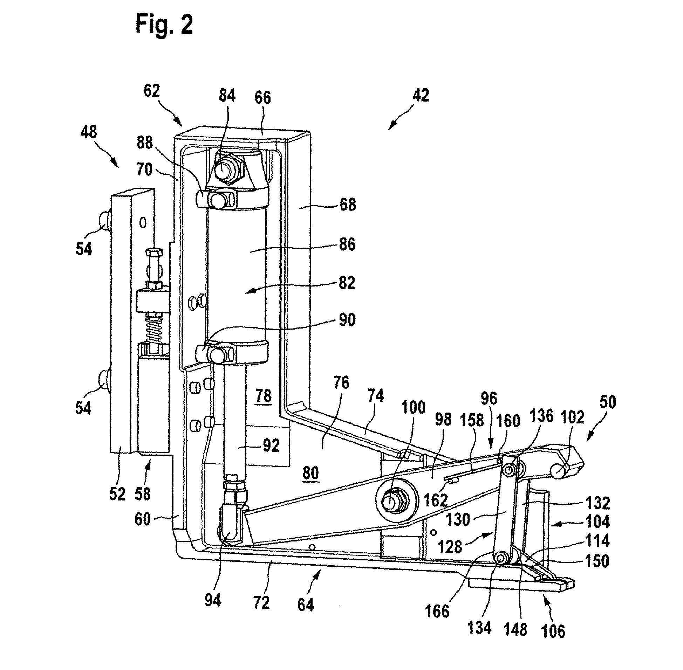

Die Klemmvorrichtungen 42 weisen jeweils eine in den Figuren 1 und 2 mit 48 bezeichnete Rückseite und eine mit 50 bezeichnete Vorderseite auf. Unter Bezugnahme auf Figur 2 weist die Klemmvorrichtung 42 ein an ihrer Rückseite 48 angeordnetes, plattenförmiges, sich in vertikaler Richtung erstreckendes Befestigungselement 52 auf. In das Befestigungselement 52 greifen zwei auf unterschiedlichen Höhen angeordnete Befestigungsschrauben 54. Die in Figur 1 dargestellte Vorschubvorrichtung 40 weist auf ihrer der Rückseite 48 der Klemmvorrichtung 42 zugewandten Seite eine sich zwischen den Führungsschienen 36 und 38 und in vertikaler Richtung erstreckende Wand 56 auf. Mit Hilfe der Befestigungsschrauben 54 kann das Befestigungselement 52 der Klemmvorrichtung 42 an der Wand 56 der Vorschubvorrichtung 40 befestigt werden, um die Klemmvorrichtung 42 mit der Vorschubvorrichtung 40 zu verbinden. Bei einer Bewegung der Vorschubvorrichtung 40 entlang der Führungsschienen 36 und 38 bewegen sich die Klemmvorrichtungen 42 also gemeinsam mit der Vorschubvorrichtung 40.

Unter weiterer Bezugnahme auf Figur 2 weist die Klemmvorrichtung 42 eine Verbindungseinrichtung 48 auf, mit welcher das Befestigungselement 52 und ein im Wesentlichen L-förmiges Gehäuse 60 der Klemmvorrichtung 42 miteinander verbunden sind.

Das Gehäuse 60 weist einen rückwärtigen, sich in vertikaler Richtung erstreckenden ersten Schenkel 62 auf. Von dem unteren Ende des ersten Schenkels 62 steht ein sich in horizontaler Richtung erstreckender zweiter Schenkel 64 des Gehäuses 60 nach vorne ab. Der erste Schenkel 62 weist an seinem oberen Ende eine erste obere Wand 66 auf. An die erste obere Wand 66 schließt sich eine in Richtung auf den zweiten Schenkel 64 erstreckende Vorderwand 68 an. Ferner schließt sich an die erste obere Wand 66 eine sich in Richtung auf den zweiten Schenkel erstreckende Rückwand 70 an. Die Rückwand 70 stößt an ihrem unteren Ende an einen sich in horizontaler Richtung erstreckenden Gehäuseboden 72 des zweiten Schenkels 64. Der zweite Schenkel 64 weist ferner eine sich an die Vorderwand 68 des ersten Schenkels 62 anschließende, winkelig zu dem Gehäuseboden 72 verlaufende und sich in Richtung auf die Vorderseite 50 der Klemmvorrichtung 42 erstreckende zweite obere Wand 74 auf.

Das Gehäuse 60 weist ferner eine Seitenwand 76 auf, die an die Wände 66 bis 70 sowie an den Gehäuseboden 72 und die Wand 74 angrenzt. Die Seitenwand 76 und die Wände 66 bis 70 begrenzen einen ersten Innenraum 78 des ersten Schenkels 62 des Gehäuses 60. Die Seitenwand 76, der Gehäuseboden 72 und die zweite obere Wand 74 begrenzen einen zweiten Innenraum 80 des zweiten Schenkels 64 des Gehäuses 60. Die Innenräume 78 und 80 gehen ineinander über, so dass das Gehäuse 60 insgesamt einen L-förmigen Raum (ohne Bezugszeichen) begrenzt.

In dem ersten Innenraum 78 des Gehäuses 60 ist eine sich insgesamt in vertikaler Richtung erstreckende Antriebseinheit 82 angeordnet. Die Antriebseinheit 82 ist an ihrem oberen Ende mit Hilfe eines Drehlagers benachbart zu der ersten oberen Wand 66 an der Seitenwand 76 drehbar gelagert.

Die Antriebseinheit 82 umfasst einen doppelt wirkenden Zylinder 86, dessen Kammern über einen ersten, oberen Druckluftanschluss 88 und über einen zweiten, unteren Druckluftanschluss 90 mit Druckluft gespeist werden können.

In dem Zylinder 86 der Antriebseinheit 82 ist ein Kolben längsverschieblich geführt. Eine mit dem Kolben verbundene Kolbenstange 92 erstreckt sich mit einem freien Ende von dem Zylinder 86 in Richtung auf den Gehäuseboden 72 des zweiten Schenkels 64. Die Kolbenstange 92 weist an ihrem dem Zylinder 86 abgewandten Ende einen Gelenkkopf 94 auf.

Die Klemmvorrichtung 42 weist ein sich im Wesentlichen durch den zweiten Innenraum 80 des Gehäuses 60 hindurch erstreckendes Klemmelement 96 auf, das als länglicher Spannhebel 98 ausgebildet ist. Der Spannhebel 98 ist an seinem rückwärtigen Ende mit Hilfe des Gelenkkopfs 94 drehbeweglich mit dem unteren Ende der Kolbenstange 92 verbunden. Der Spannhebel 98 erstreckt sich von dem Gelenkkopf 94 aus in Richtung auf die Vorderseite 50 der Klemmvorrichtung 42 und ist in einem etwa mittigen Abschnitt über ein Lager 100 drehbeweglich an der Seitenwand 76 des Gehäuses 60 gelagert.

Der Spannhebel 98 steht an seinem der Vorderseite 50 der Klemmvorrichtung 42 zugewandten Ende über das Gehäuse 60 hervor und trägt in diesem Bereich ein bolzenförmiges Andruckelement 102.

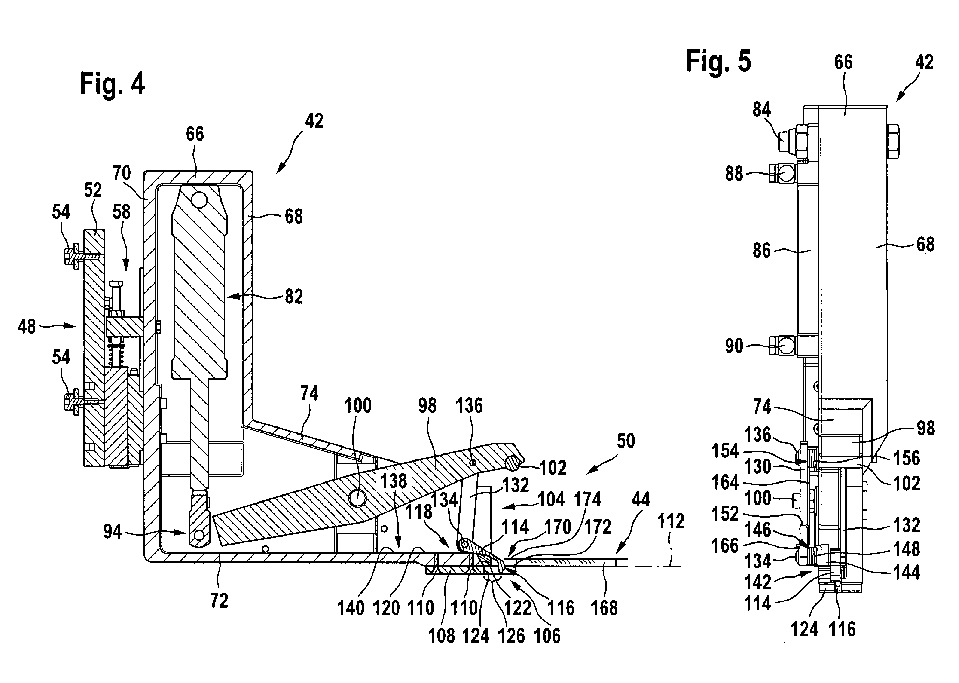

Die Klemmvorrichtung 42 der Sägevorrichtung 10 umfasst eine insgesamt mit 104 bezeichnete Sperreinrichtung, mit welcher die Klemmvorrichtung 42 gesperrt oder freigegeben werden kann. Die Sperreinrichtung 104 weist eine in Figur 4 detailliert dargestellte Auflageeinrichtung 106 auf. Diese umfasst ein sich in horizontaler Richtung erstreckendes, plattenförmiges Auflageelement 108. Das Auflageelement 108 ist über Schrauben 110 mit dem der Vorderseite 50 der Klemmvorrichtung 42 zugewandten Ende des Gehäusebodens 72 verbunden. Die Oberseite des Auflageelements 108 definiert eine Auflageebene 112, auf die ein Werkstück 44 aufgelegt werden kann.

Die Sperreinrichtung 104 weist ferner ein fingerförmiges, sich parallel zur Seitenwand 76 der Klemmvorrichtung 42 erstreckendes Kontaktelement 114 auf, das in der in Figur 4 dargestellten Lage die Auflageebene 112 durchsetzt. Das Kontaktelement 114 weist auf seiner der Vorderseite 50 der Klemmvorrichtung 42 zugewandten Seite einen gekrümmten Anlageabschnitt 116 auf, an den das zu sägende Werkstück 44 angelegt werden kann.

Die Sperreinrichtung 104 weist außerdem eine erste Führungseinrichtung 118 auf, die eine Führung des Kontaktelements 114 ermöglicht. Die erste Führungseinrichtung 118 umfasst eine Führungsfläche 120. Diese ist in einem rückwärtigen Bereich von einer Oberseite des Gehäusebodens 72 und in einem vorderen Bereich von einem vorderen Abschnitt 122 des Gehäusebodens 72 sowie einem sich hieran anschließenden, vorderen Abschnitt 124 des Auflageelements 108 gebildet. Die Abschnitte 122 und 124 der Führungsfläche 120 bilden gemeinsam einen Führungsabschnitt 126, welcher die Auflageebene 112 durchsetzt.

Die Sperreinrichtung 104 weist ferner ein insgesamt mit 128 bezeichnetes Verriegelungselement auf. Dieses ist durch zwei flächige, leistenförmige Riegel 130 und 132 gebildet. Die Riegel 130 und 132 sind parallel zueinander angeordnet. An ihrem in Figur 2 unteren Ende sind die Riegel 130 und 132 über ein Drehlager 134 mit einem in Figur 2 rückwärtigen Ende des Kontaktelements 114 drehbeweglich verbunden. Das rückwärtige Ende des Kontaktelements 114 ist hierbei zwischen den Riegeln 130 und 132 aufgenommen.

An ihrem in Figur 2 oberen Ende sind die Riegel 130 und 132 über ein weiteres Drehlager 136 drehbeweglich mit dem Spannhebel 98 verbunden. Das Drehlager 136 ist in Erstreckungsrichtung des Spannhebels 98 gesehen zwischen dem vorderen Ende des Spannhebels 98, an dem das Andruckelement 102 angeordnet ist, und dem Lager 100, an dem der Spannhebel 98 drehbeweglich gelagert ist, angeordnet.

Die Sperreinrichtung 104 weist zur Führung der Riegel 130 und 132 des Verriegelungselements 128 eine zweite Führungseinrichtung 138 auf. Diese umfasst eine Lagerfläche 140, die von einer Oberseite des Gehäusebodens 72 gebildet ist. Das Verriegelungselement 128 umfasst eine in Figur 5 insgesamt mit 142 bezeichnete Lagereinrichtung. Diese weist ein an dem Drehlager 134 angeordnetes Rolllager 144 auf. Das Rolllager 144 kann bei einer Bewegung des Verriegelungselements 128 auf der Lagerfläche 140 abrollen.

Die Sperreinrichtung 104 weist unter Bezugnahme auf Figur 5 eine erste Kraftbeaufschlagungseinrichtung 146 in Form einer ersten Feder 148 auf. Die erste Feder 148 ist als Drehschenkelfeder ausgebildet, die um das Drehlager 134 herum gewickelt ist. Die erste Feder 148 weist ein erstes Federende 150 auf, das sich auf dem Kontaktelement 148 abstützt (vgl. Figur 2). Die erste Feder 148 weist ferner ein zweites Federende 152 auf, das sich an dem ersten Riegel 130 des Verbindungselements 128 abstützt (vgl. Figur 5).

Die Sperreinrichtung 104 weist ferner eine in Figur 5 insgesamt mit 144 bezeichnete zweite Kraftbeaufschlagungseinrichtung in Form einer zweiten Feder 156 auf. Die zweite Feder 156 ist als Drehschenkelfeder ausgebildet, deren Wicklung um das weitere Drehlager 136 herum verläuft. Die zweite Feder 156 stützt sich mit einem ersten freien Federende 158 an dem Spannhebel 98 ab (vgl. Figur 2). Hierfür weist der Spannhebel 98 einen benachbart zu dem weiteren Drehlager 136 angeordneten vorderen Anschlag 160 sowie einen weiter rückwärtig angeordneten hinteren Anschlag 162 auf (vgl. Figuren 2 und 3). Die Anschläge 160 und 162 sind bolzenförmig ausgebildet und fest mit dem Spannhebel 98 verbunden. Die zweite Feder 156 weist außerdem ein zweites freies Federende 164 auf, das sich parallel zu dem Riegel 130 erstreckt (vgl. Figur 5). Das zweite freie Federende 164 umgreift mit einem in Figur 5 rückwärtigen Endabschnitt 166 den Riegel 130.

Mit Hilfe der Klemmvorrichtung 42 kann ein in den Figuren 3, 4, 6a bis 6c und 7a bis 7c abschnittsweise dargestelltes Werkstück 44 erfasst werden. Das Werkstück 44 hat einen schichtförmigen Aufbau und weist einen massiven Abschnitt 168 auf, der von einem nicht massiven Randabschnitt 170 begrenzt ist. In dem Randabschnitt 170 steht eine erste, untere Furnierschicht 172 über den massiven Abschnitt 168 hervor. Ferner steht in dem Randabschnitt 170 eine zweite, obere Furnierschicht 174 über den massiven Abschnitt 168 hervor.

Die Klemmvorrichtung 42 und die Sperreinrichtung 104 funktionieren wie folgt:

In den Figuren 2 bis 5, 6a und 7a ist die Klemmvorrichtung 42 mit Hilfe der Sperreinrichtung 104 gesperrt. Die Freigabe der Klemmvorrichtung 42 erfolgt in Abhängigkeit der Lage des Werkstücks 44 relativ zu der Klemmvorrichtung 42.

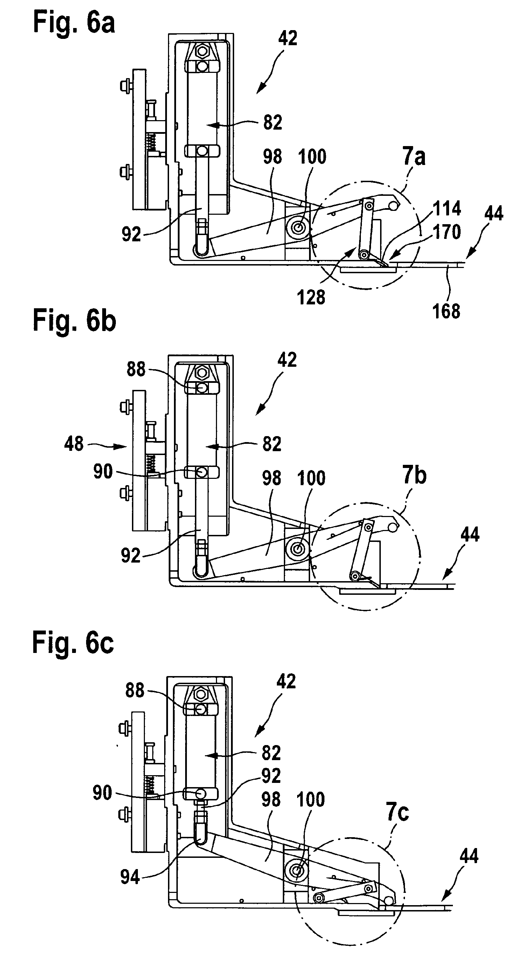

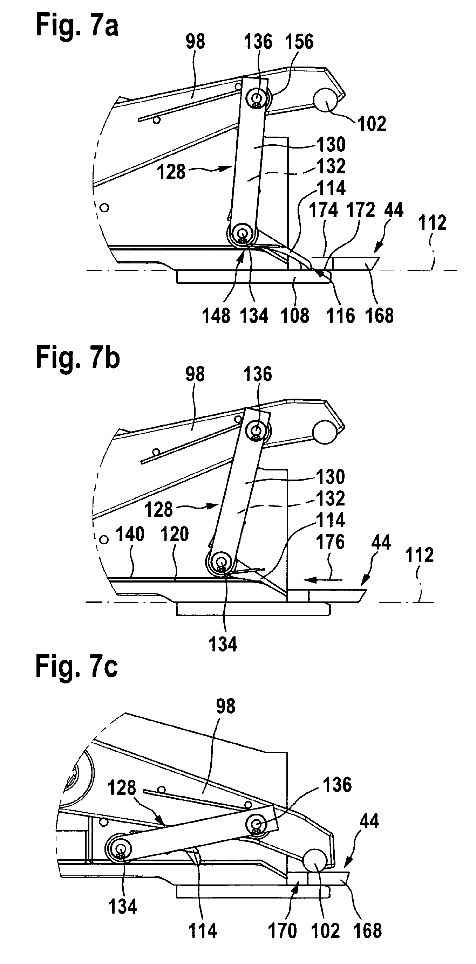

In den Figuren 6a und 7a ist die Klemmvorrichtung 42 in ihrem gesperrten Zustand dargestellt. Hierbei ist die Kolbenstange 92 der Antriebseinheit 82 maximal ausgefahren, so dass der um das Lager 100 drehbare Spannhebel 98 im Bereich des Andruckelements 102 maximal von dem Werkstück 44 beabstandet ist. Die Riegel 130, 132 des Verriegelungselements 128 nehmen eine Blockierstellung ein, in der eine Bewegung des Andruckelements 102 in Richtung auf das Werkstück 44 blockiert ist. Die zweite Feder 156 steht unter Vorspannung, stützt sich an dem Spannhebel 98 ab und drückt das in den Figuren 6a und 7a untere Ende der Riegel 130, 132 nach vorn in Richtung auf das Werkstück 44. Die erste Feder 148 stützt sich an dem Riegel 130 des Verriegelungselements 128 ab und ist so vorgespannt, dass der Anlageabschnitt 116 des Kontaktelements 114 nach unten gedrückt wird, so dass dieser die Anlageebene 112 durchsetzt (vgl. auch Figur 4). Die Federn 148 und 156 definieren also eine Vorzugsstellung der Sperreinrichtung 104, in welcher das Verriegelungselement 128 eine Blockierstellung und in welcher das Kontaktelement 114 eine Sperrstellung einnimmt.

In der in Figur 6a und 7a dargestellten Lage des Verriegelungselements 128 kann das Andruckelement 102 nicht in Richtung auf das Werkstück 44 bewegt werden. Somit ist ausgeschlossen, dass das Andruckelement 102 in der in Figuren 6a und 7a dargestellten Lage des Werkstücks 44 in Richtung auf das Werkstück 44 bewegt wird und dort die zweite Furnierschicht 174 in dem über den massiven Abschnitt 168 des Werkstücks 44 hervorstehenden Randabschnitt 170 beschädigt.

Um die Klemmvorrichtung 42 freizugeben, so dass das Werkstück 44 ohne Beschädigung erfasst werden kann, wird das Werkstück 44 mit seinem Randabschnitt 170 in Richtung auf den Anlageabschnitt 116 des Kontaktelements 114 bewegt, bis der Rand der ersten Furnierschicht 172 den Anlageabschnitt 116 des Kontaktelements 114 berührt.

Unter weiterer Bezugnahme auf Figuren 6b und 7b wird das Werkstück 44 parallel zu der Auflageebene 112 in einer in Figur 7b mit 176 bezeichneten Handhabungsrichtung in Richtung auf die Rückseite 48 der Klemmvorrichtung 42 bewegt. Hierdurch wird das Kontaktelement 114 in Richtung auf die Rückseite 48 der Klemmvorrichtung 42 gedrückt. Das Kontaktelement 114 wird dabei mit Hilfe des Führungsabschnitts 126 aus einer die Auflageebene 112 durchsetzenden Lage in eine Lage oberhalb der Auflageebene 112 versetzt, in welcher das Kontaktelement 114 auf der Führungsfläche 120 geführt ist. Da das Kontaktelement 114 und die Riegel 130, 132 des Verriegelungselements 128 über das Drehlager 134 drehbeweglich miteinander verbunden sind, wird durch die rückwärtige Bewegung des Kontaktelements 114 auch das in Figur 7b untere Ende des Verriegelungselements 128 in Richtung auf die Rückseite 48 der Klemmvorrichtung 42 bewegt. Hierbei rollt das in Figur 5 dargestellte Rolllager 144 auf der Lagerfläche 140 ab.

Wenn das Kontaktelement 114 die in Figur 7b dargestellte Freigabestellung erreicht hat, nimmt das Verriegelungselement 128 eine Lösestellung ein, in welcher der Spannhebel 98 der Klemmvorrichtung 42 mit Hilfe der Antriebseinheit 82 bewegt werden kann. Wenn nun der zweite Druckluftanschluss 90 der Antriebseinheit 82 mit Druckluft beaufschlagt wird, wird die Kolbenstange 92 aus der in Figur 6b dargestellten ausgefahrenen Lage in eine in Figur 6c dargestellte eingefahrene Lage gebracht. Mit Hilfe des Gelenkkopfs 94 wird diese Bewegung der Kolbenstange 92 in eine Schwenkbewegung des Spannhebels 98 um das Lager 100 herum umgesetzt, so dass das Andruckelement 102 in Richtung auf das Werkstück 44 bewegt wird. Hierbei wird das Verriegelungselement 128 im Bereich des Drehlagers 134 weiter in Richtung auf die Rückseite 48 der Klemmvorrichtung 42 bewegt. Hierbei wird ein Teil der mit Hilfe der Antriebseinheit 82 erzeugten Kraft dazu verwendet, die durch die zweite Feder 156 erzeugte Vorspannung zu überwinden. Gleichzeitig wird durch die beschriebene Bewegung des Drehlagers 134 auch das Kontaktelement 114 weiter in Richtung auf die Rückseite 48 der Klemmvorrichtung 42 bewegt. Ein Teil der mit Hilfe der Antriebseinheit 82 aufgebrachten Kraft wird dazu verwendet, die Vorspannung der ersten Feder 148 zu überwinden, so dass schließlich das Andruckelement 102 in Anlage mit dem Werkstück 44 gebracht werden kann. Aus Figur 7c geht hervor, dass das Andruckelement 102 nicht auf den Randabschnitt 170 des Werkstücks 44 drückt, sondern auf den massiven Abschnitt 168 des Werkstücks 44. Dort kann das Andruckelement 102 eine hohe Klemmkraft auf das Werkstück 44 ausüben, ohne dieses zu beschädigen.

Wenn die Antriebseinheit 82 ausgehend aus der in Figuren 6c und 7c dargestellten Stellung der Klemmvorrichtung 42 drucklos geschaltet wird oder die Kolbenstange 92 durch Druckbeaufschlagung des ersten Druckluftanschlusses 88 aktiv in die in Figur 6a dargestellte Lage verfahren wird, wird das Andruckelement 102 des Klemmelements 98 von dem massiven Abschnitt 168 des Werkstücks 44 abgehoben. Mit Hilfe der zweiten Feder 156 wird dann das Verriegelungselement 128 ausgehend aus der in Figur 7c dargestellten Lösestellung und über die in Figur 7b dargestellte Lösestellung zurück in die in Figur 7a dargestellte Blockierstellung gebracht. Mit Hilfe der Feder 148 wird dabei das Kontaktelement 114 aus der in Figur 7c dargestellten Freigabestellung und über die in Figur 7b dargestellte Freigabestellung zurück in die in Figur 7a dargestellte Sperrstellung gebracht.

Die beschriebene Sägevorrichtung 10 ermöglicht ein sicheres, einfaches und schonendes Erfassen des Werkstücks 44.

Weiterhin ist es vorteilhaft, dass durch die Sperrbarkeit einzelner Klemmvorrichtungen 42 der Druckluftverbrauch der Antriebseinheiten 82 reduziert werden kann. Solange eine Sperreinrichtung 104 eine zugeordnete Klemmvorrichtung 42 sperrt, verbraucht die Antriebseinheit 82 dieser gesperrten Klemmvorrichtung 42 keine Druckluft.

## Patentansprüche

1. Sägevorrichtung zum Sägen plattenförmiger Werkstücke, mit einer mindestens eine Klemmvorrichtung zum Erfassen eines Werkstücks aufweisenden Vorschubvorrichtung zum Positionieren des Werkstücks relativ zu einer Sägeeinheit, **dadurch gekennzeichnet, dass** die Sägevorrichtung (10) eine Sperreinrichtung (104) umfasst, mittels welcher in Abhängigkeit von der Lage eines zu sägenden Werkstücks (44) relativ zur Klemmvorrichtung (42) die Klemmvorrichtung (42) sperrbar oder für ein Erfassen des Werkstücks (44) freigebbar ist.

2. Sägevorrichtung nach Anspruch 1, **dadurch gekennzeichnet, dass** die Klemmvorrichtung (42) mittels der Sperreinrichtung (104) mechanisch sperrbar ist.

3. Sägevorrichtung nach Anspruch 1 oder 2, **dadurch gekennzeichnet, dass** die Sperreinrichtung (104) ein Kontaktelement (114) aufweist, das aus einer Sperrstellung, in welcher die Sperreinrichtung (104) die Klemmvorrichtung (42) sperrt, in eine Freigabestellung, in welcher die Sperreinrichtung (104) die Klemmvorrichtung (42) zum Erfassen des Werkstücks (44) freigibt, überführbar ist.

4. Sägevorrichtung nach einem der Ansprüche 1 bis 3, **dadurch gekennzeichnet, dass** das Kontaktelement (114) einen Anlageabschnitt (116) für eine Anlage des Werkstücks (44) aufweist und dass das Kontaktelement (114) durch eine Bewegung des angelegten Werkstücks (44) aus der Sperrstellung in die Freigabestellung überführbar ist.

5. Sägevorrichtung nach einem der Ansprüche 1 bis 4, **dadurch gekennzeichnet, dass** die Sägevorrichtung eine eine Auflageebene (112) definierende Auflageeinrichtung (106) zur Auflage des Werkstücks (44) umfasst.

6. Sägevorrichtung nach 5, **dadurch gekennzeichnet, dass** das Kontaktelement (114) in einer zu der Auflageebene (112) parallelen oder im Wesentlichen parallelen Richtung bewegbar ist.

7. Sägevorrichtung nach Anspruch 5 oder 6, **dadurch gekennzeichnet, dass** das Kontaktelement (114) in einer zu der Auflageebene (112) senkrechten oder im Wesentlichen senkrechten Richtung bewegbar ist.

8. Sägevorrichtung nach einem der Ansprüche 5 bis 7, **dadurch gekennzeichnet, dass** das Kontaktelement (114) in der Sperrstellung des Kontaktelements (114) auf der Auflageebene (112) aufliegt.

9. Sägevorrichtung nach einem der Ansprüche 5 bis 7, **dadurch gekennzeichnet, dass** das Kontaktelement (114) in der Sperrstellung des Kontaktelements (114) die Auflageebene (112) durchsetzt.

10. Sägevorrichtung nach einem der Ansprüche 3 bis 9, **dadurch gekennzeichnet, dass** die Sperreinrichtung (104) eine erste Führungseinrichtung (118) zur Führung des Kontaktelements (114) zwischen der Sperrstellung und der Freigabestellung umfasst.

11. Sägevorrichtung nach Anspruch 10, **dadurch gekennzeichnet, dass** die erste Führungseinrichtung (118) eine Führungsfläche (120) umfasst.

12. Sägevorrichtung nach Anspruch 11, **dadurch gekennzeichnet, dass** die Führungsfläche (120) einen Führungsabschnitt (126) aufweist, welcher die Auflageebene (112) durchsetzt.

13. Sägevorrichtung nach einem der Ansprüche 3 bis 12, **dadurch gekennzeichnet, dass** die Sperreinrichtung (104) eine erste Kraftbeaufschlagungseinrichtung (146) umfasst, die eine der Sperrstellung des Kontaktelements (114) entsprechende Vorzugsstellung des Kontaktelements (114) definiert.

14. Sägevorrichtung nach Anspruch 13, **dadurch gekennzeichnet, dass** die erste Kraftbeaufschlagungseinrichtung (146) eine Feder (148) umfasst oder als Feder (148) ausgebildet ist.

15. Sägevorrichtung nach einem der Ansprüche 1 bis 14, **dadurch gekennzeichnet, dass** die Klemmvorrichtung (42) zum Erfassen des Werkstücks (44) ein relativ zu dem Werkstück (44) bewegliches Klemmelement (96) aufweist.

16. Sägevorrichtung nach Anspruch 15, **dadurch gekennzeichnet, dass** das Klemmelement (96) als Spannhebel (98) ausgebildet ist.

17. Sägevorrichtung nach Anspruch 15 oder 16, **dadurch gekennzeichnet, dass** die Sperreinrichtung (104) ein direkt oder indirekt mit dem Kontaktelement (114) verbundenes Verriegelungselement (128) umfasst, das direkt oder indirekt mit dem Klemmelement (96) verbunden ist.

18. Sägevorrichtung nach Anspruch 17, **dadurch gekennzeichnet, dass** das Verriegelungselement (128) und das Klemmelement (96) eine Kniehebelanordnung bilden.

19. Sägevorrichtung nach Anspruch 17 oder 18, **dadurch gekennzeichnet, dass** das Verriegelungselement (128) und das Kontaktelement (114) drehbeweglich miteinander verbunden sind.

20. Sägevorrichtung nach einem der Ansprüche 17 bis 19, **dadurch gekennzeichnet, dass** das Klemmelement (96) und das Verriegelungselement (128) drehbeweglich miteinander verbunden sind.

21. Sägevorrichtung nach einem der Ansprüche 17 bis 20, **dadurch gekennzeichnet, dass** das Verriegelungselement (128) aus einer Blockierstellung, in welcher das Verriegelungselement (128) eine Bewegung des Klemmelements (96) in Richtung auf das Werkstück (44) blockiert, in eine Lösestellung, in welcher das Klemmelement (96) in Richtung auf das Werkstück (44) bewegbar ist, überführbar ist.

22. Sägevorrichtung nach einem der Ansprüche 17 bis 21, **dadurch gekennzeichnet, dass** die Sperreinrichtung (104) eine zweite Führungseinrichtung (138) zur Führung des Verriegelungselements (128) zwischen der Blockierstellung und der Lösestellung umfasst.

23. Sägevorrichtung nach einem der Ansprüche 17 bis 22, **dadurch gekennzeichnet, dass** die zweite Führungseinrichtung (138) eine Lagerfläche (140) zur Führung einer Lagereinrichtung (142) des Verriegelungselements (128) umfasst.

24. Sägevorrichtung nach Anspruch 23, **dadurch gekennzeichnet, dass** die Lagereinrichtung (142) eine Gleitfläche umfasst oder als Gleitfläche ausgebildet ist.

25. Sägevorrichtung nach Anspruch 23 oder 24, **dadurch gekennzeichnet, dass** die Lagereinrichtung (142) ein Rolllager (144) umfasst oder als Rolllager (144) ausgebildet ist.

26. Sägevorrichtung nach einem der Ansprüche 23 bis 25, **dadurch gekennzeichnet, dass** die Lagerfläche (140) der zweiten Führungseinrichtung (138) und die Führungsfläche (120) der ersten Führungseinrichtung (118) zumindest abschnittsweise identisch sind.

27. Sägevorrichtung nach einem der Ansprüche 22 bis 27, **dadurch gekennzeichnet, dass** die Sperreinrichtung (104) eine zweite Kraftbeaufschlagungseinrichtung (154) umfasst, die eine der Blockierstellung des Verriegelungselements (128) entsprechende Vorzugsstellung des Verriegelungselements (128) definiert.

28. Sägevorrichtung nach Anspruch 27, **dadurch gekennzeichnet, dass** die zweite Kraftbeaufschlagungseinrichtung (154) eine Feder (156) umfasst oder als Feder (156) ausgebildet ist.
